# EUROPEAN PATENT APPLICATION

(11) **EP 4 535 500 A1**
(43) Date of publication of application: **09.04.2025**
(21) Application number: 23202113.9
(22) Date of filing: 06.10.2023
(51) Int. Cl.: H01M 10/42, H01M 10/48, H04B 5/72, H01Q 1/42, H01Q 15/00

(54) **BATTERY CELL SUITABLE FOR WIRELESS COMMUNICATION OF DATA SIGNALS, A BATTERY COMPRISING AT LEAST ONE CELL**

(71) Applicant: Belenos Clean Power Holding AG, 2502 Bienne (CH)
(72) Inventor: FRANCESCUTTO, Gianni, 2504 Bienne (CH); LECHENNE, Alexandre, 2608 Courtelary (CH)
(74) Representative: ICB SA

(57) **Abstract**

A battery comprises at least one battery cell (10, 10'), the cell comprising in a housing structure at least one slave cell management unit (BMS), and at least one communication unit (14) for wireless communication of data or parameter or measurement signals with a communication unit (24) of a master battery management unit (20). The cell comprises combined means in a portion of a wall of the cell housing structure or forming part of an externally or internally configured plate disposed on a wall facing the cell communication unit (14) for enhancing or promoting good reception of radio frequency signals with the master battery management unit (20).

## Description

### Technical scope of the invention

The present invention relates to a battery cell, which is adapted for wireless communication of data signals with a master management unit of a battery.

The present invention also relates to a battery comprising at least one cell adapted for wireless communication of data signals with a master management unit of the battery.

### Prior art

A battery is made up of a plurality of cells connected in series or in parallel. These cells typically have different characteristics in terms of production, temperature distribution or life curve. In addition, they often have different states of charge, which degrades the battery and reduces its operational efficiency. To optimise the battery's capacity and lifespan, a BMS (Battery Management System) is traditionally used, which is an electronic system for controlling the states of charge of the battery cells. This system balances the charge of the cells by short-circuiting certain cells or redistributing the energy between the cells.

Patent EP 3 605 778 B1 may be cited in this connection, which describes a balancing unit on board a battery cell. The balancing unit comprises means for measuring cell state parameters, wireless communication means for sending and receiving state parameters, and wireless energy transfer means. However, the wireless communication means are generally located within each cell and wireless communication of data to a cell balancing and data management system may encounter obstacles to wireless communication through cell walls, which may affect the successful communication of wireless data signals to be processed by the electronic system.

Patent application EP 3 517 350 A1 describes a wireless battery management system and a battery pack equipped therewith. The wireless battery management system includes a master BMS configured to transmit a first radio frequency (RF) signal including a state detection command over a first wireless channel, and a plurality of slave BMSs coupled to one or more battery modules in one-to-one correspondence. Each of the slave BMSs is configured to detect status information of the battery module to which the corresponding slave BMS is coupled in response to the first RF signal, and transmit a second RF signal indicative of the battery module status information via the first wireless channel. As the transmission of bi-directional messages by wireless data or parameter RF signals takes place through housing walls of each battery pack or battery cell, the transmission of bi-directional messages by RF signals through at least one wall of each cell housing may be reduced or disturbed or interfered with by the material or materials of the walls constituting the housing of each cell.

### Summary of the invention

The invention thus relates to a battery cell, which is adapted for wireless communication of bi-directional messages by data or parameter signals with a master battery management unit. The cell comprises means combined in a portion of a wall of the cell housing or forming part of an externally configured plate to enable proper transmission of wireless bi-directional messages by RF data or parameter signals, according to the features of independent claim 1.

Particular forms of the means combined with a wall portion of each battery cell or forming part of an externally configured plate for good wireless bidirectional transmission of RF data or parameter signals are defined in dependent claims 2 to 8.

A further aspect of the invention relates to a battery comprising at least one cell adapted for wireless communication of bi-directional messages by RF data or parameter signals with a battery master management unit or external to the battery, according to the features of independent claim 9.

Particular forms of the battery, which may comprise one or more battery cells connected substantially in series with one another and each comprising means combined with a wall portion of each battery cell or forming part of an externally configured plate for the proper wireless transmission of bi-directional messages by RF data or parameter signals, are defined in dependent claims 10 to 17.

### Brief description of the drawings

The purposes, advantages and characteristics of the battery cell, and of the battery with at least one cell comprising means for improving or enabling good reception or transmission of RF wireless data or parameter signals, will become clearer in the following non-limiting description with reference to the drawings, in which :

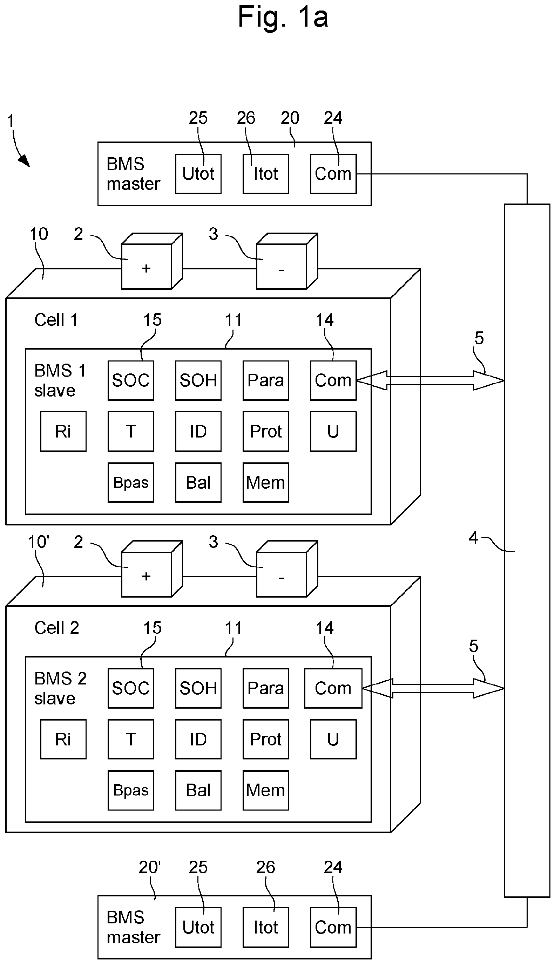

- Figure 1a represents various electrical or electronic components constituting a power supply battery, in particular for a vehicle, which comprises several battery cells adapted for wireless communication of bidirectional messages by RF signals of data or parameters with one or two master battery management units for controlling each cell according to the invention,

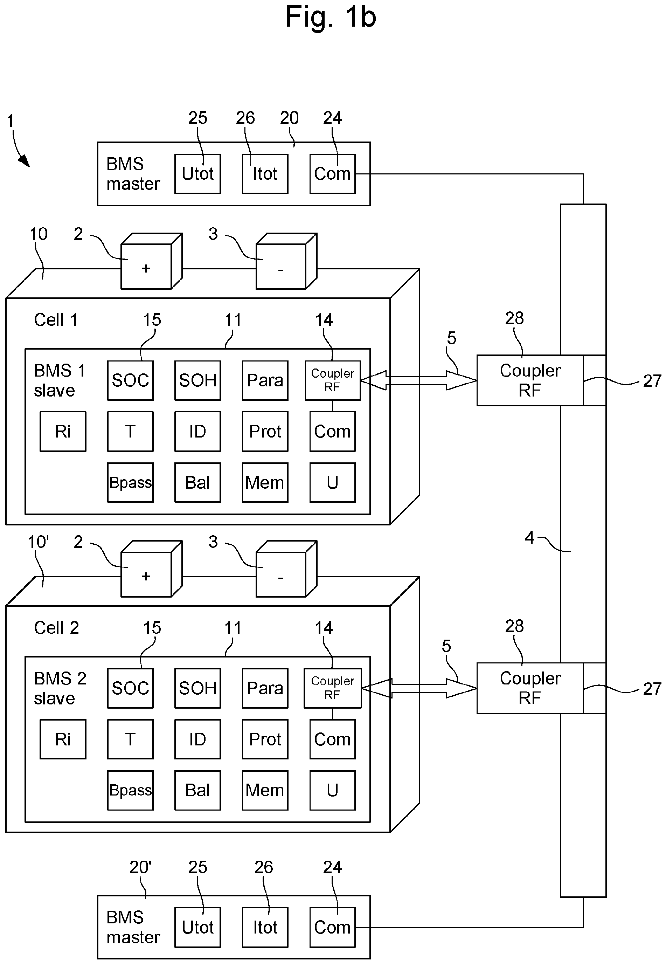

- Figure 1b represents a variant of Figure 1a of various electrical or electronic components constituting a power supply battery, in particular for a vehicle, which comprises several battery cells adapted for wireless communication of bidirectional messages by RF couplers of data or parameters with one or two master control battery management units of each cell according to the invention,

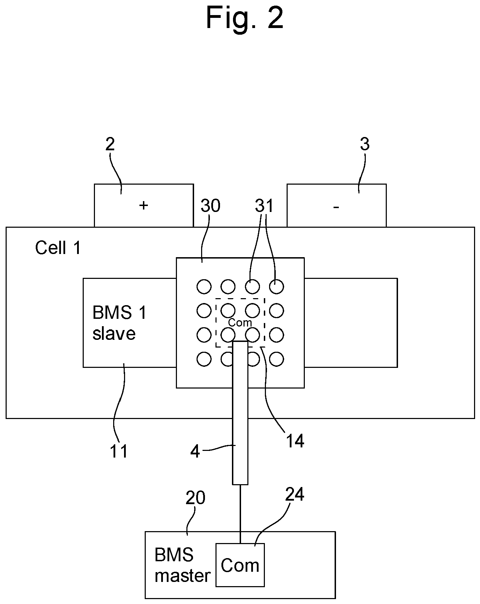

- Figure 2 represents a first embodiment of a battery cell, which comprises means integrated into a wall of the cell casing, or means forming part of a plate disposed externally or internally on the cell as represented according to the present invention to improve the reception or transmission of data or parameter signals,

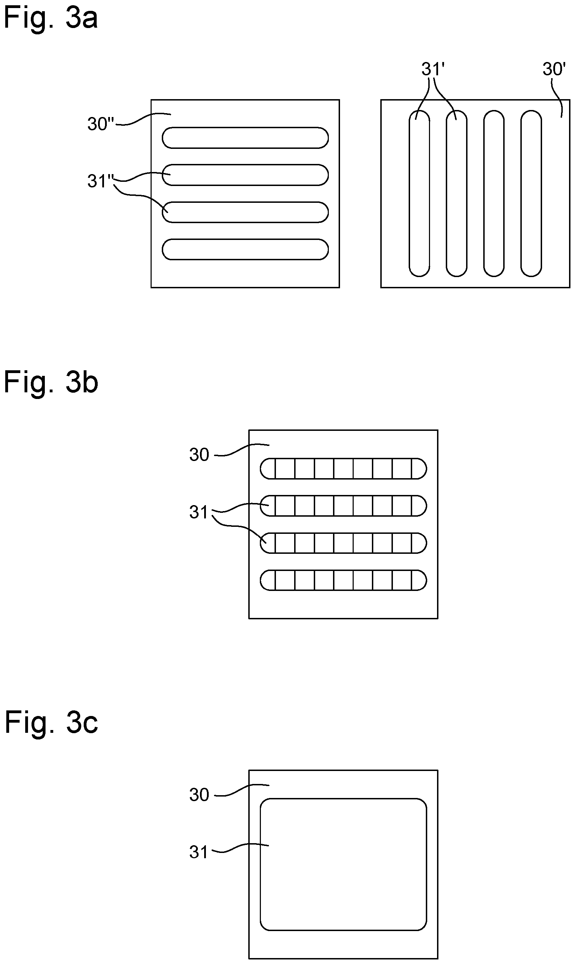

- Figures 3a to 3c show three embodiments of means mounted on each cell of a battery to improve the reception and transmission of RF data or parameter signals in accordance with the invention.

### Detailed description of the invention

In the following description, reference is made to a battery, generally to a battery for powering a vehicle, which is primarily a car. However, it may also refer to a boat, a submarine, an aircraft, a train, a construction machine or any other vehicle likely to be powered by a battery for its operation or movement.

According to the present invention, the means for improving the transmission of bidirectional messages by RF signals makes it possible to maintain the functionality of the battery, which retains its qualities concerning its impermeability to liquids and to a certain extent to oxygen.

It should be noted that different types of cell can be produced. It can be a "pouch" cell. This pouch cell is made with all its electronic or electrical components under vacuum in its casing. A second type of cell is the "prismatic" cell, which is a plastic or metallic case containing all the electronic or electrical components. Finally, a third form of the cell is a cell with a cylindrical outer shape, which includes all the electronic components used subsequently also for wireless communication with a master or central battery management unit.

The battery comprises in a housing not shown at least one battery cell for providing an electrical supply when charged by two positive and negative output terminals for operation or movement of a vehicle. In the battery housing, the battery comprises at least one battery cell. However, such a battery may comprise a plurality of battery cells, which are preferably connected in series with each other so that all the cells provide the supply voltage to two positive and negative output terminals of the battery. The cells of the battery may also be connected to each other in parallel, or by a combination of cells connected in parallel and cells connected in series one after the other.

Each battery cell comprises, in a housing structure, an electrolyte, which may be solid, liquid or in gel (or semi-solid) form. Each cell comprises electronic components as explained below with reference to Figures 1a and 1b, including a cell or battery management unit, and a communication unit, which comprises at least one antenna in Figure 1a or an RF coupler for radio frequency signals, for example in the near field. The cell communication unit also enables data or parameter or measurement signals, such as the state of charge of the battery, to be transmitted via the same receiving antenna or another transmitting antenna. In this case, it is preferred to use the same antenna for receiving and transmitting wireless data or parameter signals.

In order to effect wireless reception of radio frequency signals for all the battery cells, a cable may be provided connecting on the one hand a master management control unit in the battery for controlling all the battery cells, and on the other hand the cable being disposed in the vicinity of each receiving and transmitting antenna of the battery cells in a near-field configuration so as to communicate wirelessly with each battery cell so as to constitute near-field communication.

According to the present invention described below, each battery cell comprises means for improving and facilitating the reception of data or parameter signals wirelessly, in particular by proximity radio frequency signals transmitted by the cable disposed in proximity to each battery cell. Several alternative designs are described below with reference to the figures shown to describe the various means used to improve and facilitate the reception of wireless data or parameter signals, as well as the transmission of RF data or parameter signals from each cell to the master management control unit in the battery. However, it may be envisaged not to use the cable in the battery for wireless reception and transmission of data or parameter or measurement signals in particular from each cell in question and the master management control unit.

Generally, if the battery comprises several battery cells, these cells are generally connected by their external electrical connection terminals in series one after the other. The voltage of each cell is generally controlled so as to be able to redistribute the electrical charge equally in each cell one after the other so as not to damage the battery.

Figure 1a represents a particular case of a battery 1 which normally comprises at least a first battery cell 10 with a set 11 of different electronic components, which may be connected together or at least be connected to electrical connection terminals 2 and 3 generally opening out from an upper wall of a casing structure of the cell 10 for electrical connection with other cells or parts of the battery 1.

The battery 1 also comprises a first battery management unit or system 20, which is responsible for communicating with the first cell 10. In the case where the battery 1 comprises several cells, for example two cells 10 and 10', the first master battery management unit may also communicate wirelessly with a second cell 10' of the battery 1 in order to monitor, for example, the state of charge 15 of each cell, various parameters, the temperature, an identifier of each cell or other elements of the cells. Communication between the master defined battery management unit 20 and the slave defined cells 10, 10' provided in the battery 1 is by wireless communication using RF radio frequency signals. Typically, the battery 1 may comprise an electrical cable 4, which is disposed in the battery in the vicinity of each wireless communication unit 14 of the cells 10, 10'. As shown in Figure 1a, communication is effected by the transmission of bi-directional wireless messages by data or parameter signals 5 for example via a cable 4 connected at one end to a communication unit 24 of the first master battery management unit 20 and to the communication unit 14 of each cell.

Each cell 10, 10' first wirelessly receives an RF signal transmitted by the first active master battery management unit 20, and according to the request of the active master battery management unit 20, the first cell 10 shown transmits RF signals in response to the active master battery management unit 20 via the connecting cable 4.

In this figure 1a, battery cells 10, 10' are shown for simplicity only two cells are shown, but several other cells may also be provided. In addition, a second master battery management unit 20' may also be provided, which is placed in a passive state when the first master battery management unit 20 is active. But the two battery management units 20, 20' can wirelessly transmit bidirectional messages by RF signals of data or parameters or measurements wirelessly transmitted by each cell 10, 10' of the battery 1 each by a communication unit 24. In each master battery management unit 20, and redundant master 20', there is provided an electronic component 25 for monitoring the total voltage and total current 26 of the battery.

Figure 1b shows a variant of the battery shown in Figure 1a. RF couplers 28 are arranged along the cable 4 close to each cell 10, 10' of the battery 1, each being connected to the metal wire 27 by an open annular portion of the cable 4. In each circuit 10, 10', an RF coupler 14 is provided in connection with a communication unit for the transmission of bidirectional messages transmitted by data or parameter or measurement RF signals 5.

Figure 2 represents just a first form of execution of means 30, 31 for improving and promoting or facilitating the correct transmission of bidirectional messages by data or parameter or measurement signals from the first cell 10 following signals previously transmitted by the first master battery management unit 20. The signals transmitted by the first master battery management unit 20 were transmitted to the first cell either directly wirelessly or via a cable 4 with couplers 28 arranged opposite each antenna of the communication unit of the first cell 10 or of a second cell 10' shown in particular in Figure 1b.

The means for improving and promoting good wireless reception and transmission of data or parameter or measurement signals can be achieved by means of a plate 30 pierced with various holes 31, which are impervious to liquids and to some extent to the penetration of double oxygen (O2) or moisture or water, and give access to the not shown communication antenna of the first cell 10, which is generally located in the housing structure of the first cell 10. The antenna of the communication unit 14 of the first cell 10 may be adapted to receive transmitted signals first. Holes of various shapes or the like may be of the same or varying size.

The means for improving and promoting good wireless reception and transmission of data or parameter or measurement signals can be also achieved by means of a cell housing directly pierced with various holes 31, which are impervious to liquids and to some extent to the penetration of double oxygen (O2) and moisture.

For each embodiment shown in Figures 2, 3a, 3b, 3c, a hole is permeable to the electromagnetic signals necessary for bidirectional communication and through which the RF coupler will be able to exchange its communication signals. On the other hand, the hole is impervious to exchanges of liquid and, to a certain extent, oxygen, and moisture between the outside world and the inside of the battery.

This first cell 10 comprises a communication unit 14, which is generally integrated into the cell housing structure. The communication unit may be linked directly to an RF coupler in the communication unit, which typically comprises an antenna not shown, which may be used for both the reception and wireless transmission of RF radio frequency signals towards the first master battery management unit 20.

As shown in this Figure 2, the RF signals transmitted by the first master battery management unit 20 pass through a cable 4 so as to approach the communication unit of the first cell 10 or other cells. The cable 4 is arranged to wirelessly transmit bidirectional messages by RF signals of data or parameters or measurements at the plate pierced with holes arranged between the transmission of the wireless signals from the first master battery management unit 20 and the communication unit of the first cell 10.

Much more generically, the means for improving and promoting good reception of wireless radiofrequency signals with the wireless communication unit 14 of the first cell 10 consists in providing for the making of holes at the location of the antenna, which may be an antenna made on a printed circuit, of the communication unit 14 of the first cell 10. In this first embodiment, the holes are mainly made through the plate 30 made of an insulating material and fixed to an insulating wall portion facing the communication unit 14. The communication unit 14 of the first cell 10 also comprises a layer insulating the housing structure, enabling signals to be received correctly.

In a second embodiment, the holes can be made through the metallic and/or insulating material of the wall portion facing the communication unit 14. The communication unit 14 of the first cell 10 also comprises a layer insulating the housing structure, enabling signals to be received correctly.

Other embodiments of means for improving and promoting good reception and transmission of data or parameter or measurement signals are shown in Figures 3a to 3c. Plates to be fixed to a wall portion of the housing structure facing each communication unit 14 of each cell 10, 10' of the battery are shown. It may also be possible to use the cable to properly route the RF signals.

Figure 3a represents one of the means for improving or promoting good reception of radio frequency signals generally originating from a communication unit of a master battery management system as explained with reference to Figure 2 above. These combined means are provided by means of a first plate 30' comprising longitudinal apertures 31' arranged parallel to one another and preferably evenly spaced from one another in this case vertically. A second plate 30" is provided for these combined means with longitudinal apertures 31" arranged parallel one above the other and preferably evenly spaced from one another horizontally. The first plate 30' can be mounted on the second plate 30" or vice versa to form a plate assembly. Thus the combination of the vertical longitudinal openings 31' of the first plate 30' and the horizontal longitudinal openings 31" of the second plate 30" generates openings giving access to each communication unit of each cell which has these means to improve and promote the reception of radio frequency signals. Of course, it may be possible to have direct access to an antenna of the communication unit 14 of each battery cell. Under these conditions, a great improvement in communication reception is obtained by these combined means. In this case it is quite plausible to add a layer of insulation through the opening in the housing structure of the first cell.

Figure 3b represents a further embodiment of means for improving or promoting good reception of radio frequency signals generally from a communication unit of a master battery management system as explained with reference to Figure 2 above. In this embodiment, provision may be made for a direct combination of the first and second plates shown in Figure 3a, or for designing a plate with apertures made therethrough of square or substantially rectangular shape and generating or making spacings between each aperture at a determined depth of the plate 30 for example by a machining laser beam or other machining technique.

In a third embodiment shown in figure 3c, only one plate 30 with a single opening 31 completely passing through the plate is recommended so that at least one antenna of a communication unit 14 of each cell 10 or 10' can be placed above it without any protection. However, with a single opening 31, it may also be advisable to fit a protective plate above the communication unit 14 of each cell 10, 10'. This protective plate should be made of a material that does not interfere with radio frequency signals.

Of course, for these three alternative embodiments of the combined means for improving or promoting the transmission of radio frequency signals, provision is also made for establishing near field communication via a cable 4 connected to at least one communication unit 24 of a master battery management unit 20 as explained with reference to Figures 1a or 1b above.

In the foregoing description, different embodiments may be provided for the combined means for enhancing or promoting the reception of radio frequency signals generally from a master battery management unit within the scope of the independent claims described.

## Claims

1. A battery cell (10, 10'), which comprises in a housing structure at least one slave cell management unit (slave BMS), and at least one communication unit (14) for wirelessly communicating bidirectional messages by data or parameter or measurement signals with a communication unit (24) of a master battery management system (20), **characterized in that** the cell comprises combined means in a portion of a wall of the cell housing structure or forming part of an externally or internally configured plate disposed on a wall facing the cell communication unit (14) for enhancing or promoting good bi-directional transmission of radio frequency signals..

2. The battery cell (10, 10'), according to claim 1, arranged to communicate with the battery via an electric cable (4), which is arranged in the battery in the vicinity of each wireless communication unit (14) of the cell or cells (10, 10'), **characterized in that** communication can be effected by wireless transmission of data or parameter or measurement signals (5), via a cable (4) connected on one side to a communication unit (24) of the master (20) and redundant master (20') battery management system and to the communication unit (14) of each cell (10, 10').

3. The battery cell (10, 10'), according to claim 1, **characterized in that** the means for improving and promoting good wireless reception and transmission of data or parameter or measurement signals are achieved by using various holes (31) on the housing structure, which are impervious to water or moisture or double oxygen, but allow electromagnetic waves to pass through, and arranged to give access to a communication antenna of the communication unit (14) of each cell (10, 10').

4. The battery cell (10, 10'), according to claim 1, **characterized in that** the means for improving and promoting good wireless reception and transmission of data or parameter or measurement signals are achieved by means of a plate (30) pierced with various holes (31) which are impervious to water or moisture or double oxygen, but allow electromagnetic waves to pass through, and arranged to give access to a communication antenna of the communication unit (14) of each cell (10, 10').

5. The battery cell (10, 10') according to claim 3 or 4, **characterized in that** the various holes (31), which are impervious to water or moisture or double oxygen but allow electromagnetic waves to pass through, are of identical or variable size in order to give access to a communication antenna of the communication unit (14) of each cell (10, 10').

6. The battery cell (10, 10') according to claim 1, **characterized in that** the means for improving and promoting good wireless reception and transmission of data or parameter or measurement signals are realized by means of a first plate (30') comprising longitudinal apertures (31') arranged parallel to one another and preferably regularly spaced from one another vertically and a second plate (30')' provided for these combined means with longitudinal apertures (31") arranged parallel above one another and preferably regularly spaced from one another horizontally.

7. The battery cell (10, 10') according to claim 6, **characterized in that** the second plate is fixedly mounted to the first plate.

8. The battery cell (10, 10'), according to claim 1, **characterized in that** the means for improving and promoting good wireless reception and transmission of data or parameter or measurement signals are achieved by means of one plate (30) with a single opening (31) giving direct access to a communication antenna of the communication unit (14) of each cell.

9. A battery comprising at least one battery cell (10, 10'), the cell comprising in a housing structure at least one slave cell management unit (BMS), and at least one communication unit (14) for wireless communication of data or parameter or measurement signals with a communication unit (24) of a master battery management system (20), **characterized in that** the cell comprises combined means in a portion of a wall of the cell housing structure or forming part of an externally configured plate disposed on a wall facing the cell communication unit (14) for enhancing or promoting good reception of radio frequency signals with the master battery management system (20).

10. The battery, according to claim 9, **characterized in that** the means for improving and promoting good wireless reception and transmission of data or parameter or measurement signals are realized by using various holes (31) on the cell housing structure, which are impervious to water or moisture or double oxygen or by means of a plate (30) pierced with various holes (31) and arranged to give access to a communication antenna of the communication unit (14) of each of the cells (10, 10').

11. The battery according to claim 10, **characterized in that** the various holes (31) are of identical or variable size to give access to a communication antenna of the communication unit (14) of each cell (10, 10').

12. The battery, according to claim 9, **characterized in that** it comprises at least one cable (4) connected on one side to a communication unit (24) of a master battery management system (20) and to the communication unit (14) of each cell (10, 10') to establish communication by wireless transmission of data or parameter or measurement signals (5) with the communication unit (14) of each cell (10, 10').

13. The battery, according to claim 12, **characterized in that** it includes RF couplers (28) arranged along the cable (4) close to each cell (10, 10') of the battery, each being connected to a metal wire (27) by an open annular portion of the cable (4).

14. The battery, according to claim 9, **characterized in that** the means for improving and promoting good wireless reception and transmission of data signals or parameters or measurements are realized by means of a first plate (30') comprising longitudinal apertures (31') arranged parallel to one another and preferably regularly spaced from one another vertically and a second plate (30") provided for these combined means with longitudinal apertures (31") arranged parallel above one another and preferably regularly spaced from one another horizontally.

15. The battery according to claim 14 **characterized in that** the second plate is fixedly mounted to the first plate.

16. The battery, according to claim 9, **characterized in that** the means for improving and promoting good wireless reception and transmission of data signals or parameters or measurements are realized by means of one plate (30) with a single opening (31) giving direct access to a communication antenna of the communication unit (14) of each cell (10, 10').

17. The battery, according to claim 9, **characterized in that** a second master battery management system (20') is connected by the cable (4) in a passive state, when the first master battery management unit (20) is active, and **in that** both master battery management systems (20, 20') are adapted to receive data or parameter or measurement signals transmitted wirelessly from each cell (10, 10') of the battery each by a communication unit (24).
